Europäisches Patentamt

(19) European Patent Office

Office européen des brevets

(11) Publication number: **0 003 148**
**B1**

(12) **EUROPEAN PATENT SPECIFICATION**

(45) Date of publication of patent specification: **12.05.82**

(21) Application number: **79200011.9**

(22) Date of filing: **09.01.79**

(51) Int. Cl.³: **H 01 J 9/22, C 09 K 11/02, C 09 K 11/46, H 01 J 29/20 //C09K11/477**

(54) Method of producing luminescent screens, luminescent screens produced by this method and cathode-ray tubes including such luminescent screens.

(30) Priority: **13.01.78 NL 7800405**

(43) Date of publication of application:
**25.07.79 Bulletin 79/15**

(45) Publication of the grant of the patent:
**12.05.82 Bulletin 82/19**

(84) Designated Contracting States:
**BE DE FR GB IT NL**

(56) References cited:
**DE - A - 2 516 206**
**GB - A - 971 017**
**US - A - 3 894 164**

**ELECTROCHEMICAL TECHNOLOGY, vol. 5 (no. 5/6, 1967. 05/06) pages 303—306 Princeton USA J. W. GILLILAND & M. S. HALL: "Solution spray technique for the preparation of cathodoluminescent phosphor films."**

(73) Proprietor: **N.V. Philips' Gloeilampenfabrieken Pieter Zeemanstraat 6 NL-5621 CT Eindhoven (NL)**

(72) Inventor: **Popma, Theo Johan August c/o Int. Octrooibureau B.V. 6, Prof. Holstlaan NL-5600 Eindhoven (NL)**
Inventor: **Van Tol, Maurits Willem c/o Int. Octrooibureau B.V. 6, Prof. Holstlaan NL-5600 Eindhoven (NL)**

(74) Representative: **Evers, Johannes Hubertus Marie et al, INTERNATIONAAL OCTROOIBUREAU B.V Prof. Holstlaan 6 NL-5656 AA Eindhoven (NL)**

Method of producing luminescent screens, luminescent screens produced by this method and cathode-ray tubes including such luminescent screens

The invention relates to a method of producing a luminescent screen comprising a substrate bearing a luminescent layer, the substrate being heated to an elevated temperature and being sprayed at said elevated temperature with an aerosol containing as a disperse phase drops of a solution of compounds which are converted into luminescent materials at said elevated temperature. In addition, the invention relates to a luminescent screen produced by such a method and to a cathode-ray tube including such a luminescent screen.

A method of the type defined in the preamble, wherein the substrate of the luminescent screen is sprayed with the solution, is disclosed in German Offenlegungsschrift 2,516,206. This known method has the drawback that the luminescent layer has a non-uniform thickness and an insufficient adhesion to the substrate. The lack of a proper adhesion becomes especially apparent if the luminescent screen obtained must subsequently be subjected to a high temperature heat treatment. In such a heat treatment, which is usually necessary for obtaining the optimum luminescent properties, the luminescent layer may become detached, wholly or partially, from the substrate. A serious drawback of the screens produced by this known method is that when used in cathod-ray tubes, the luminescent screens must not be subjected to high excitation densities. When the screens are subjected to high excitation densities, the screens are also thermally highly loaded, and it appeared that partly owing to the above-mentioned poor adhesion, the heat conduction between the luminescent layer and the substrate is low, so that the screens become defective owing to burning of the luminescent layer and/or detachment of the luminescent layer from the substrate.

In the currently used luminescent screens having a powder layer as the luminescent layer, and which are used extensively in conventional cathode-ray tubes for displaying television pictures, the excitation density has a value in the order of 0,01 W/cm$^2$. The highest load permissible in special cases for screens having a powder layer is approximately 0.5 W/cm$^2$. However, for some applications luminescent screens should be available which can be loaded much higher, for example to more than 5 W/cm$^2$. Such highly loaded screens are used in cathode-ray tubes for generating a very bright light spot. This light spot can be used as a moving or stationary light source or for forming a very bright picture. A very bright moving or stationary light source is, for example, required in a device for optically scanning an information track on an information carrier or in a film scanner for converting photographic pictures into television pictures. The formation of a very bright picture occurs in projection television tubes.

Highly loadable luminescent screens can be made by means of a chemical gas transport reaction (chemical vapour deposition, CVD) or by epitaxial growth from a solution on a single crystal substrate (liquid phase epitaxy, LPE). Both methods have the drawback that they are relatively expensive and that their performance is very critical. In addition, a drawback of LPE is that this method requires a single crystal as the substrate which greatly limits the possibilities of choice of substrate. CVD has the drawback of being a very slow process.

The invention is based on the recognition that highly loadable luminescent screens can be obtained by means of a method described in the preamble, if stringent requirements are imposed on the sizes of the liquid particles to be brought into contact with the substrate.

A method according to the invention for producing a luminescent screen comprising a substrate bearing a luminescent layer, the method comprising the steps of heating the substrate to an elevated temperature and spraying the substrate at said elevated temperature with an aerosol containing as a disperse phase drops of a solution of compound which are converted at said elevated temperature into a luminescent material, is characterized in that the aerosol is a stable aerosol wherein the average drop size of the aerosol is between 0.1 and 10 $\mu$m.

The term "aerosol" is understood to mean a two phase system, one phase (the disperse phase) being dispersed as solid particles or as droplets in the other phase (the dispersion medium), and the dispersion medium being in the form of a gas and/or a vapour. In this description and in the Claims, a stable aerosol is understood to mean such a two phase system wherein substantially no change occurs in the particle or droplet size distribution for at least 1 minute.

A method according to the invention produces a luminescent screen, the luminescent layer of which has a very uniform thickness and a very good adhesion to the substrate. This is a result of the use of a stable aerosol containing very small liquid droplets which give rise to the formation of a large plurality of crystallization nuclei on the substrate. Experiments showed that such an adhesion of the luminescent layer to the substrate can be obtained in a luminescent screen made by a method according to the invention, no difference is observed between the strength of the bond and that of the substrate itself. Owing to this good adhesion, the luminescent screens made by method according to the invention have excellent thermal conduction between the luminescent layer and the substrate. Therefore they can be operated with high excitation densities because satisfactory heat discharge from the luminescent layer via the substrate is possible.

An embodiment of a luminescent screen made by a method according to the invention is characterized in that the luminescent layer consists of adjacent, fine-grained crystalline rods which are

2

tightly bonded to the substrate and have their longitudinal axes oriented substantially perpendicularly to the surface of the substrate. An advantage of this embodiment is that the heat conduction in the luminescent layer is very high.

A cathod-ray tube including a luminescent screen produced by a method according to the invention is suitable for screen loads exceeding 5 W/cm² and can be advantageously used in the applications specified above using highly loaded luminescent screens.

Compared to the above-defined, known CVD and LPE methods, a method according to the invention has the advantage that it can be performed more cheaply and more easily. It is not necessary to use a single crystal as the substrate. In addition, a method according to the invention is suitable for automation and the rapid production of large quantities of screens.

Different methods and devices are known per se for preparing a stable aerosol such as is required in a method according to the invention. It is possible to atomize the relevant salt solutions pneumatically. Alternatively the solutions can be atomized by means of a vibrating valve or use can be made of an ultrasonic atomizer (see, for example, C. N. Davies, Aerosol Science, Academic Press, London, New York (1966)).

In a method according to the invention for obtaining the desired results an aerosol is to be used having an average droplet size between 0.1 and 10 $\mu$m. Preferably the average drop size is between 0.5 and 5 $\mu$m. It was found that the best results were obtained with such an aerosol as regards adhesion as well as heat conduction and also the growth rate of the layer. Said average droplet size can be obtained by passing the aerosol through one or more vessels where the drops which are too large are retained. An aerosol thus obtained is so stable that it can be easily passed via supply pipes to the substrate to be sprayed.

Preference is given to a method according to the invention which is characterized in that a luminescent layer is produced of oxidic rare earth phosphors, starting from an aerosol consisting of solutions of nitrates, chlorides, acetylacetonates, alcoholates and/or phenolates of the composite elements in a polar organic solvent or in water. Oxidic rare earth phosphors are understood to mean luminescent materials consisting of oxidic compounds of one or more of the elements having an atomic number of 39 and from 57 to 71 inclusive. This group of materials comprises, for example, the oxides, silicates, borates, aluminates, vanadates, oxysulphides and oxyhalides of said elements. In addition, oxidic compounds activated by lanthanide elements, such as alkaline earth metal aluminates, are also considered to belong to this group. Suitable polar organic solvents are, for example, ethylene glycol monoethyl ether, acetyl acetone, dimethylformamide and butyl acetate. Silicate, aluminate and borate phosphors can be produced from aerosols consisting of organic compounds such as silanes, tetraethyl orthosilicate, aluminium acetyl acetonate, tributyl borate and triisopropyl borate dissolved in such solvents.

In a method according to the invention, the substrate is preferably kept at a temperature of 300—700°C during spraying. It was found that such a substrate temperature renders it possible for the aerosol droplets to land on the substrate, at least for the major part, still in the liquid form with the solvents and rates of supply of the aerosol normally used in practice. Evaporation and/or decomposition of the solvent on the substrate, whereafter decomposition of the salts and formation of the luminescent material takes place on the substrate, appears to promote the formation of properly adhering, uniform luminescent layers.

In a method according to the invention a quartz, quartz glass or aluminium oxide substrate is preferably used. The aluminium oxide may be used in a densely sintered, polycrystalline form or in a monocrystalline form (sapphire, corundum). Said materials appear to furnish an excellent bond to the luminescent materials and can withstand high temperatures and temperature changes.

In a method according to the invention, it is advantageous to subject the luminescent screen produced to a final heat treatment at 900—1500°C. Such a final heat treatment, which is known per se, may furnish a considerable improvement in the luminescent properties, because it furnishes an improvement in the crystalline structure of the luminescent layer.

The invention will now be further explained with reference to a drawing and a number of embodiments.

In the drawing, Figure 1 shows schematically an arrangement for performing a method according to the invention, Figure 2 shows schematically and in cross-section a luminescent screen produced by a method according to the invention and Figure 3 shows, schematically, a cathod-ray tube having a luminescent screen, produced by a method according to the invention.

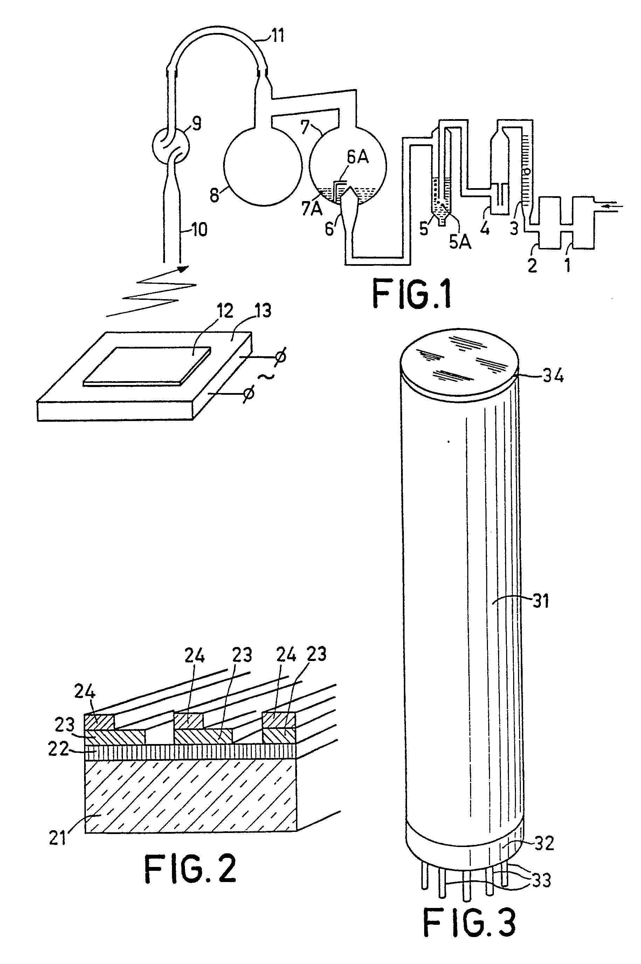

In the arrangement shown in Figure 1, an aerosol is formed by pneumatic atomization. To this end a carrier gas, generally air is passed through the system in the direction indicated by the arrow. The air passes, in this sequence, through vessels 1 and 2, in which dust is retained, a flowmeter 3, a non-return bottle 4 and a wash bottle 5 filled with a solvent 5A which is the solvent used in a solution 7A of salts of the composite elements used to make the luminescent layer, and in which wash bottle 5 the air is moistened with this solvent 5A. The air flows through an atomiser 7. The air flowing from the atomizer orifice 6 flows past exit orifice of a suction tube 6A whose other end is positioned in the salt solution 7A present in the atomiser 7. The air flowing past the end of the tube 6A sucks the solution and atomizes it forming an aerosol. Thereafter the aerosol is passed through a spherical vessel 8 wherein the largest

3

drops are retained and thereafter through a splash sphere 9 to a nozzle 10. A flexible hose 11 connects the spherical vessel 8 to the splash sphere 9 so that the nozzle 10 can be moved in a zig-zag manner across a substrate 12 of the luminescent screen to be produced. The substrate 12 is heated by a hot plate 13.

Example I

A solution was made of yttrium acetyl acetonate in ethylene glycol monoethyl ether ("Cellosolve," Registered Trade Mark) containing 24.99 mg Y per ml. Terbium nitrate was added to the solution in such a quantity that the solution contained 0.45 mg Tb per ml of "Cellosolve." This solution was atomized by means of air (flow rate 10 1/min) in an arrangement as shown in Figure 1. The air was moistened in the wash bottle 5 with "Cellosolve." The diameter of the atomiser orifice 6 was 1 mm and that of the exit orifice of the suction tube 6A was 0.5 mm. Approximately 20 ml/hour of solution 7A was consumed. The aerosol thus obtained was stable, and when passing through the supply tube 11 to the nozzle 10, substantially no change in drop size distribution occurred. A polished and carefully cleaned quartz glass plate having a diameter of approximately 25 mm was used as the substrate 12 for the luminescent screen. This plate was heated to a temperature of 320°C and was sprayed for approximately 2 hours, so that an approximately 1.0 $\mu$m thick luminescent layer was formed which had the composition $Y_{1.98}Tb_{0.02}O_3$. Thereafter the screen was heated for $\frac{1}{2}$ hour in air to 1000°C to improve the crystal structure and the luminescent properties of the layer. The thin luminescent layer appeared to consist of a coherent agglomerate of fine-crystalline rods having their longitudinal axes oriented perpendicularly to the substrate 12 and which rods were firmly bonded thereto. On excitation, for example by electrons, the screen had a green luminescence.

The luminescence layer of the screen thus produced was coated with an aluminium film, approximately 0.075 $\mu$m thick. Thereafter the screen was pladed in a demountable cathode-ray tube. The screen was excited in this tube by a defocussed electron beam (diameter of the target spot approximately 4 mm) at a screen voltage of 10 kV. Table 1 shows the measured radiant intensities I (in $\mu$W/sr) for different values of the current strength $i$ (in $\mu$A) of the electron beam. The second column of Table 1 states the associated screen load $P$ (in W/cn²). It appeared that, as the result of the proper heat discharge, the screen can be operated with high loads (> 5 W/cm²) without becoming defective. It also appears that substantially no saturation of the luminescent material occurred at such high loads.

TABLE I

| i ($\mu$A) | P (W/cm²) | I ($\mu$W/sr) |
|---|---|---|
| 10 | 0.8 | 30 |
| 20 | 1.6 | 57 |
| 40 | 3.2 | 116 |
| 80 | 6.4 | 212 |

Example II

The method described in Example I was repeated except for the fact that final heating of the screen for $\frac{1}{2}$ hour in air was performed at 1150°C.

Example III

A luminescent screen was produced in a manner similar to that described in Example I, the luminescent layer of which was a red-luminescing, Eu-activated oxide having a composition defined by the formula $Y_{1.9}Eu_{0.1}O_3$. A "Cellosolve" solution, containing 22.49 mg Y and 2.01 mg Eu per ml was the starting material. Final heating of the screen in air was performed at 1150°C.

Example IV

Starting from a "Cellosolve" solution containing 22.99 mg Y and 0.48 mg Tm per ml, a luminescent screen was produced in a manner similar to that described in Example I, the luminescent layer of which was a blue luminescing, thulium-activated oxide having a composition defined by the formula $Y_{1.98}Tm_{0.02}O_3$. Final heating was performed in air at a temperature of 1150°C.

The luminescent screens produced in accordance with the Examples II, III and IV were excited in a demountable cathode-ray (screen voltage 10 kV, current strength 10$\mu$A), target spot diameter 4 mm). Table 2 shows the results of measurements of the colour point (co-ordinates $x$ and $y$) and the radiant intensity $I$ (in $\mu$W/sr) of the radiation emitted by these screens. In addition, Table 2 states the values, to be derived from these measurements, for the efficiency $\eta$ (in %) of the conversion of electrical energy

4

into radiant energy. It appears that the values of $\eta$ do not deviate to a great extent from the values obtainable with powder screens.

TABLE II

| Example | $x$ | $y$ | $I$ ($\mu$W/sr) | $\eta$ (%) |
|---|---|---|---|---|
| II | 0.340 | 0.607 | 60 | 1.0 |
| III | 0.670 | 0.327 | 300 | 5 |
| IV | 0.147 | 0.035 | 19.2 | 0.3 |

Example V

An aqueous solution of yttrium nitrate and europium nitrate, containing 22.7 mg Y and 2.04 mg Eu per ml of water, was atomised in an ultrasonic atomiser by means of a 2 MHz transducer using 10 l/min. of air as a carrier gas resulting stable aerosol was sprayed onto a substrate which was at a temperature of 400°C. Approximately 20 ml/hour of the solution was consumed. The screen obtained after approximately 1.5 hour was then subjected to a temperature treatment in air at 1100°C. The luminescent screen contained a fine-crystalline red luminescing layer having a composition defined by the formula $Y_{1.9}Eu_{0.1}O_3$ and was approximately 1 $\mu$m thick.

Figure 2 is a schematic and partly perspective view of a cross-section through a luminescent screen according to the invention provided with a luminescent layer comprising three luminescent materials, and with which it is possible to display colour pictures. The screen consists of a quartz glass substrate 21 provided with three superimposed luminescent sub-layers 22, 23 and 24 each produced by a method according to the invention, each approximately 3 $\mu$m thick. The layer 22 consists of blue-luminescing Tm-activate $Y_2O_3$, the layer 23 of green-luminescing Tb-activated $Y_2O_3$ and the layer 24 of red-luminescing Eu-activate $Y_2O_3$. The staircase pattern shown in Figure 2 (stepwidth approximately 10 $\mu$m) can be obtained by means of known etching techniques. To this end a photoresist layer is applied on the three superimposed sub-layers 22, 23 and 24, the photoresist thereafter being exposed through a suitable mask. After developing the photoresist, the first step is formed by means of etching. To obtain the second step, the above defined procedure is repeated. An electron beam impinging on the luminescent layer has a depth of penetration of approximately 2 $\mu$m so that when scanning the luminescent screen, the blue-, green- and red-luminescing materials are excited alternately.

Figure 3 is a schematic and perspective view of a cathode-ray tube according to the invention. The tube consists of a cylindrical aluminium oxide envelope 31 closed at one end by a base plate 32. The base plate 32 is provided with contact lead-throughs 33 for supplying current to an electron gun (not shown in the drawing) located within the tube in the region of the base plate 32. The other end of the envelope 31 is closed by a luminescent screen 34 consisting of a quartz glass plate, the inside main surface of which plate bears a luminescent layer of Eu-activated $Y_2O_3$ produced by a method according to the invention. The luminescent layer is coated with an aluminium film (not shown). The luminescent screen 34 is connected to the envelope 31 by means of a thermo-compression bond.

**Claims**

1. A method of producing a luminescent screen comprising a substrate bearing a luminescent layer, the method comprising the steps of heating the substrate to an elevated temperature and spraying the substrate at said elevated temperature with an aerosol containing as a disperse phase drops of a solution of compounds which are converted at said elevated temperature into a luminescent material, characterized in that the aerosol is a stable aerosol wherein the average drop size of the aerosol is between 0.1 and 10 $\mu$m.

2. A method as claimed in Claim 1, characterized in that the average drop size of the aerosol is between 0.5 and 5 $\mu$m.

3. A method as claimed in Claim 1 or Claim 2, characterized in that a luminescent layer of oxidic rare earth phosphors is produced starting from an aerosol of solutions of nitrates, chlorides, acetyl acetonates, alcoholates and/or phenolates of the component elements in a polar organic solvent or in water.

4. A method as claimed in any of Claims 1, 2 or 3, characterized in that the substrate is kept at a temperature of 300—700°C during spraying.

5. A method as claimed in any of Claims 1, 2, 3 or 4, characterized in that a substrate of quartz, quartz glass or aluminium oxide is used.

6. A method as claimed in any preceding Claim, characterized in that the luminescent screen obtained is subjected to a heat treatment at 900—1500°C.

7. A luminescent screen produced by a method as claimed in any of Claims 1 to 6, characterized in that the luminescent layer consists of adjacent, fine-grained crystalline rods which are tightly bonded to the substrate and are oriented substantially perpendicularly to the substrate.

8. A cathode-ray tube suitable for screen loads exceeding 5 W/cm² and including a luminescent screen as claimed in Claim 7.

## Revendications

1. Méthode permettant de réaliser un écran luminescent comportant un support supportant une couche luminescente, le support étant chauffé à une température élevée et arrosé, à ladite température élevée par pulvérisation d'un aérosol contenant en phase dispersée des gouttes d'une solution de composés, qui sont transformés en matériaux luminescents à ladite température élevée, caractérisée en ce que l'aérosol est un aérosol stable et la grosseur moyenne des gouttes de l'aérosol est comprise entre 0,1 et 10 μm.

2. Méthode selon la revendication 1, caractérisée en ce que la grosseur moyenne des gouttes de l'aérosol est comprise entre 0,5 et 5 μm.

3. Méthode selon la revendication 1 ou la revendication 2, caractérisé en ce qu'une couche luminescente en phosphores d'oxydes de terres rares est réalisée à partir d'un aérosol solutions de nitrates, chlorures, acétylacétonates, alcoolates et/ou phénolates des éléments composants dans un solvant organique polaire ou dans de l'eau.

4. Méthode selon l'une des revendications 1, 2 ou 3, caractérisée en ce que, lors de la pulvérisation, le support est maintenu à une température de 300 à 700°C.

5. Méthode selon l'une des revendications 1, 2, 3 ou 4, caractérisée en ce qu'on utilise un support en quartz en verre de quartz ou un oxyde d'aluminium.

6. Méthode selon l'une des revendications précédentes, caractérisée en ce que l'écran luminescent ainsi obtenu est soumis à un traitement thermique entre 900 et 1500°C.

7. Ecran luminescent obtenu avec une méthode selon l'une des revendications 1 à 6, caractérisé en ce que la couche luminescente est constituée par des bâtonnets cristallins à granulation fine, contigus, étroitement liés au support et s'étendant à peu près perpendiculairement à ce dernier.

8. Tube à rayons cathodiques convenant à des charges d'écran supérieures à 5 W/cm², caractérisé par un écran luminescent selon la revendication 7.

## Patentansprüche

1. Verfahren zur Herstellung eines Leuchtschirms mit einem Träger, der eine Leuchtstoffschicht trägt, wobei das Verfahren die Schritte der Erhöhens der Temperatur des Trägers und des Besprühens des Trägers bei der erhöhten Temperatur mit einem Aerosol, umfasst, das Tropfen einer Lösung von Verbindungen als Dispersionsphase enthält, wobei die Verbindungen bei der erhöhten Temperatur des Trägers in Leuchtstoff umgewandelt werden, dadurch gekennzeichnet, dass das Aerosol ein stabiles Aerosol ist, in dem die mittlere Tropfengrösse zwischen 0,1 und 10 μm liegt.

2. Verfahren nach Anspruch 1, dadurch gekennzeichnet, dass die mittlere Tropfengrösse des Aerosols einem Wert zwischen 0,5 und 5 μm hat.

3. Verfahren nach Anspruch 1 oder 2, dadurch gekennzeichnet, dass eine Leuchtstoffschicht aus oxidischen Seltenerdleuchtstoffen hergestellt wird, wobei von einem Aerosol von Lösungen von Nitraten, Chloriden, Azetylazetonaten, Alkoholaten und/oder Phenolaten der Leuchtstoffe bildenden Elemente in einem polaren organischen Lösungsmittel oder in Wasser ausgegangen wird.

4. Verfahren nach Anspruch 1, 2 oder 3, dadurch gekennzeichnet, dass der Träger beim Besprühen auf einer Temperatur von 300 bis 700°C gehalten wird.

5. Verfahren nach Anspruch 1, 2, 3 oder 4, dadurch gekennzeichnet, dass ein Träger aus Quarz, Quarzglas oder Aluminiumoxid verwendet wird.

6. Verfahren nach einem oder mehreren der vorangehenden Ansprüche, dadurch gekennzeichnet, dass der erhaltene Leuchtschirm einer Wärmebehandlung bie 900 bis 1500°C unterworfen wird.

7. Leuchtschirm hergestellt mit einem Verfahren nach einem oder mehreren der Ansprüche 1 bis 6, dadurch gekennzeichnet, dass die Leuchtstoffshicht aus fest mit dem Träger verankerten, aneinandergrenzenden, feinkristallinen Stäbchen besteht, die nahezu senkrecht auf den Träger gerichtet sind.

8. Kathodenstrahlröhre für Schirmbelastungen über 5 W/cm² und mit einem Leuchtschirm nach Anspruch 7.

FIG.1

FIG.2

FIG.3